# EUROPEAN PATENT SPECIFICATION

(11) **EP 3 076 837 B1**
(45) Date of publication and mention of the grant of the patent: **20.02.2019**
(21) Application number: 14806711.9
(22) Date of filing: 01.12.2014
(51) Int. Cl.: A47J 43/07

(54) **FOOD PREPARATION EQUIPMENT**
GERÄT ZUR NAHRUNGSMITTELZUBEREITUNG
UTENSILE POUR PRÉPARER DES ALIMENTS

(30) Priority: 02.12.2013 GB 201321198
(43) Date of publication of application: 12.10.2016
(60) Divisional application: 18195294.6
(73) Proprietor: Kenwood Limited, Havant, Hampshire PO9 2NH (GB)
(72) Inventor: PALMER, Paul, Havant Hampshire PO9 2NH (GB); FIELDS, Robert, Havant Hampshire PO9 2NH (GB); SHANMUGAM, Sivaprakash, Havant Hampshire PO9 2NH (GB); JOHNS, Martin, Havant Hampshire PO9 2NH (GB); HORWOOD, Martin, Havant Hampshire PO9 2NH (GB)
(74) Representative: Hector, Annabel Mary
(86) International application number: PCT/GB2014/053563
(87) International publication number: WO 2015/082893

(56) References cited:
- EP-A1- 2 522 263
- WO-A1-03/075727
- GB-A- 2 457 722
- US-A- 4 151 792
- US-B1- 8 438 971

## Description

This invention relates to food preparation equipment, and it relates more especially to such equipment for performing tasks involving heating or cooking ingredients in accordance with specific techniques, such as those involving steaming processes or pressure cooking.

Interest in home cooking is currently increasing significantly; this interest being fuelled by several factors, including the desire for healthy eating, the ever-expanding palate for different foodstuffs and the plethora of television programmes featuring celebrity chefs.

However, some of the more specialised cooking techniques, as practiced by celebrity chefs or in commercial kitchens, are carried out using special-purpose or dedicated equipment, and there are many factors which militate against the acquisition and use of such equipment for use in the home, where the equipment would likely be stored for relatively long periods between successive usages. Some of these factors are of course based purely on cost, as the acquisition of dedicated equipment, for various cooking procedures is expensive, particularly when it is considered that such equipment is unlikely to be used on a regular basis.

There are also environmental concerns about the energy and resources used to manufacture and distribute equipment that may be rarely used, and still other problems include the need to store the various pieces of equipment whilst they are out of use, and, in particular, the storage space they require, bearing in mind that storage space is at a premium in most kitchens, especially with the current trend towards smaller properties that are easier and cheaper to maintain and run. Such properties tend to have compact kitchens in which the storage of kitchen equipment can present considerably difficulties.

EP2522263 describes a food processor having a vessel with a locking lid. GB2457722 shows a kitchen machine having an electric motor for driving processing tools in above, and a heater for heating foodstuffs in the bowl. US 8438971 discloses a stand mixer and heater combination including a base with a heater assembly and a container mating member engageable with an outer container.

This invention aims to address one or more of the above issues and according to the invention from one aspect there is provided a combination of a heated stand mixer and a lidded attachment, wherein the lidded attachment adapts the stand mixer for performing steaming or pressure-cooking processes, wherein the lidded attachment comprises a bowl and a lid, wherein the lid is arranged to be latched and sealed to the bowl by means of pressure-resistant latching components. By this means, the stand mixer, which is already an extremely versatile kitchen appliance, is provided with yet further capabilities, thus providing the user with the facility to perform a specialised cooking process which, as aforesaid, would otherwise require dedicated equipment.

Preferably, the attachment is of simple construction, and is based upon the use of a bowl that simply couples to the base of the stand mixer in place of the original mixing bowl, so that it can be readily coupled to and removed from the stand mixer, and moreover can engage with existing temperature sensors provided on the stand mixer and utilised to control the temperature.

The lid of the attachment can be latched and sealed to the bowl, enabling the bowl to be used as a pressure cooker. In such circumstances, the lid is provided with suitable pressure-resistant latching components and with an over-pressure release valve, all of which may be conventional.

In other preferred embodiments of the invention, a first bowl, again designed to couple to the base of the stand mixer in place of the conventional mixing bowl, is adapted to heat water and to support one or more further bowls stacked thereon adapted for steaming, or for juice and/or jam making. In such embodiments, suitably apertured separators are incorporated into, or otherwise provided between, the stacked bowls, as is known for steaming, or for heating fruits and the like to extract juice therefrom, and the uppermost bowl is provided with a lid to contain steam within the attachment.

In still further preferred embodiments, the first bowl of the previous embodiment attachment, or a similar bowl, is provided with a vented lid thereby converting it into a rice-cooking vessel.

The heated stand mixer may have a base to support a bowl and may be provided with means for heating (such as a heater) contents of the bowl.

By this means, the stand mixer acts as a host to at least one attachment that converts it temporarily into a specialist cooking processor.

Another aspect of the invention provides a lidded attachment which temporarily adapts a heated stand mixer for performing rice-cooking, wherein the lidded attachment comprises a bowl and a lid, wherein the bowl couples to a base of the stand mixer, so that the bowl is arranged to be readily coupled to and removed from the stand mixer, and wherein the lid is a vented lid that is arranged to be latched and sealed to the bowl thereby adapting the attachment for rice-cooking.
Yet another aspect of the invention provides a lidded attachment for temporarily adapting a heated stand mixer for performing cooking operations such as pressure-cooking, steaming or rice-cooking, wherein the lidded attachment comprises a bowl and a lid, wherein the bowl comprises a first bowl configured to couple to a base of a heated stand mixer, so that the bowl is arranged to be readily coupled to and removed from the stand mixer, and adapted to support one or more further bowls stacked thereon adapted for steaming, or for juice and/or jam making, and wherein apertured separators are incorporated into, or otherwise provided between, the stacked bowls, for steaming, or for heating fruits and the like to extract juice therefrom, and wherein the lid is latched and sealed to an uppermost bowl of the stacked bowls to contain steam within the lidded attachment.
It is disclosed in our co-pending UK patent application No. GB 1314007.4, that stand mixers can be temporarily converted into appliances capable of performing specific culinary operations, such as sous-vide cooking, by the use of suitable attachments. This invention further extends the range of appliances into which the stand mixer can be converted.
The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In order that the invention may be clearly understood and readily carried into effect, embodiments thereof will now be described, by way of example only, with reference to the accompanying drawings, of which:
Figure 1(a) shows, in perspective view, a heated stand mixer fitted with a standard bowl in which ingredients can be processed and/or heated;
Figure 1(b) shows the standard bowl for use with the stand mixer;

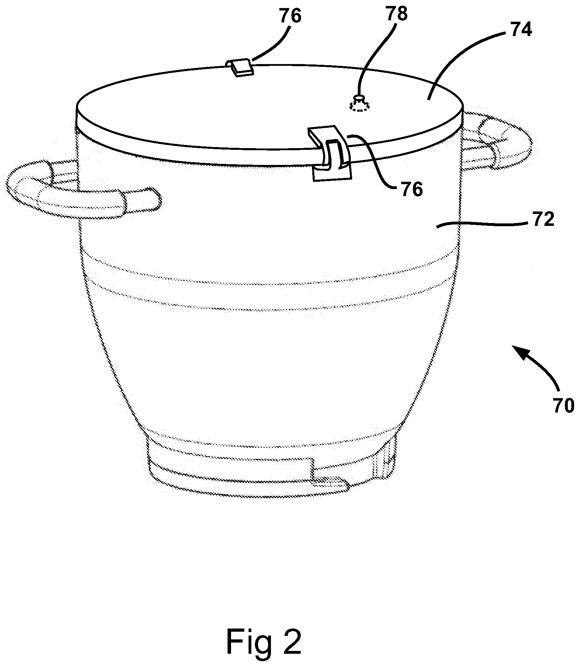

Figure 2 shows an attachment in accordance with a first embodiment for use with the stand mixer in replacement for the standard bowl and providing a pressure-cooking arrangement;
Figure 3 shows an attachment in accordance with a second embodiment and providing a steaming or juicing arrangement; and
Figure 4 shows an attachment in accordance with a third embodiment and providing a rice-cooking arrangement.

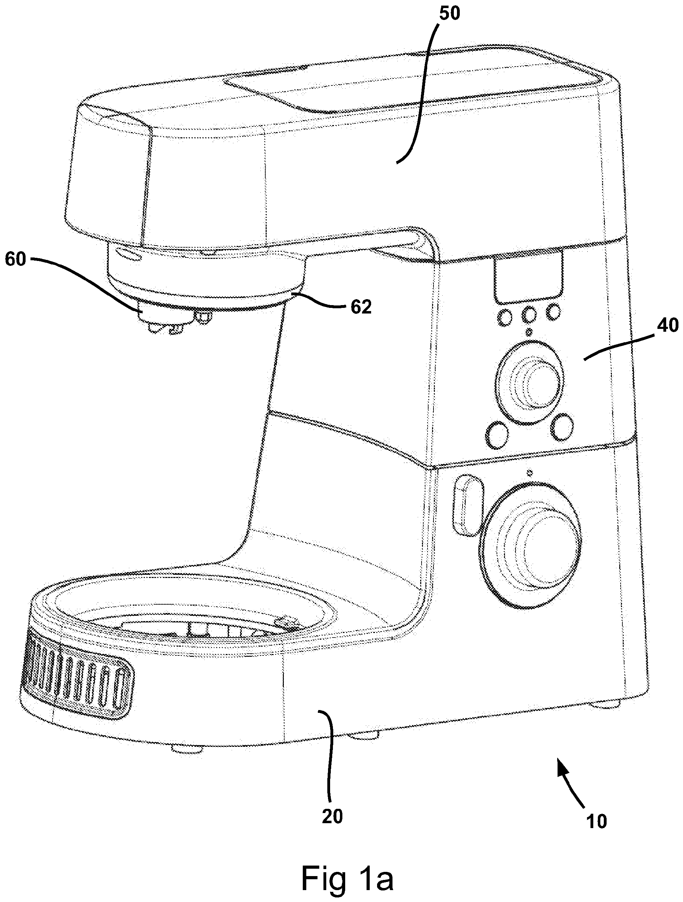

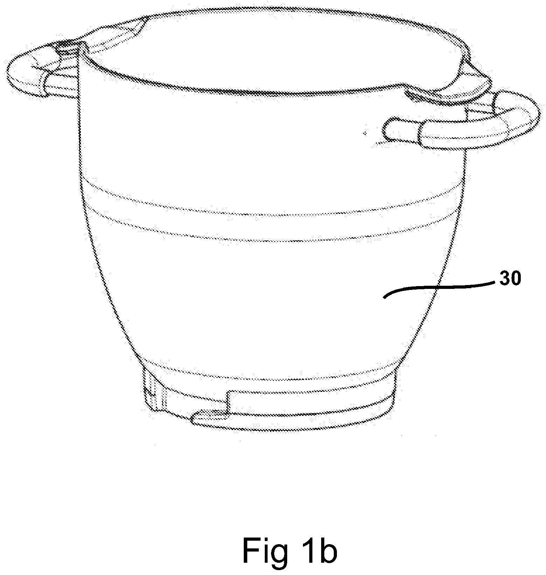

Referring now to Figures 1(a) and 1(b), the heated stand mixer shown generally at 10 is a well-established piece of kitchen equipment.

Such mixers typically comprise a generally C-shaped casing which provides a pedestal-like support 20 for a mixing bowl 30, and a generally upright support portion 40 supporting a head unit 50 that extends, for operation, overhead of the bowl 30. The head unit 50 carries a downwardly-facing, motor-powered drive outlet 60 to which, for normal usage of the mixer 10, the shank of a kneading, whisking or other processing tool (not shown) is temporarily connected for use. The powered movement imparted to the shanked tool is conventionally planetary in nature, and the tool is suspended from the drive outlet 60 and reaches down into the bowl 30 to mix ingredients therein.

Stand mixers are versatile appliances, and typically provide, in addition to the aforementioned outlet 60 that drives the shanked mixing tool, at least one further drive outlet for driving attachments with different speed and/or torque requirements, and configured for performing other tasks. Typically, such additional drive outlets may be set up to drive the operating tool of a high speed food processor attachment, or a low-speed/high torque attachment, such as a mincer.

The stand mixer 10 also incorporates heating means, such as a heater, (not shown, but usually accommodated within the base 20), enabling ingredients in the bowl 30 to be heated whilst being subjected to the mixing action. If the heating means is not incorporated into the stand mixer 10, it may alternatively be incorporated into the bowl 30, or it may be incorporated into a heating pad which is separate from both the bowl 30 and the stand mixer 10, but may be temporarily associated with them, for example by being interposed between the two, when required to perform a heating function. It is also possible to provide a distributed heating means comprising a combination of two or more of the above-mentioned arrangements. Moreover, as is known, the heating means may take any preferred form, such as inductive, conductive, or radiative, and may be provided by any convenient agency or method.

In any event, the degree of heating is selectable, allowing the ingredients to be completely cooked, partially cooked, or merely warmed, according to user requirements and/or the procedures dictated by individual recipes.

Typically, such heated stand mixers incorporate sophisticated temperature monitoring and control arrangements, for example such as those described and claimed in WO-A1-2009/103945, whereby the temperature of ingredients in the bowl 30 can be accurately controlled.

In the following embodiments the drive outlet 60 is not used for the principal cooking operations, though it may of course be utilised in appropriate circumstances, after the principal cooking operation has been completed, if the user considers that mixing and/or stirring of the preferred foodstuffs would be beneficial. In such circumstances, conventional mixing tools or special-purpose tools can be inserted into the drive outlet 60, depending upon the nature of the process and the need to respect any variations in configuration of the bowl from the standard mixing bowl 30 normally employed with the stand mixer 10.

This first embodiment provides an attachment 70 consisting of a bowl 72 that can be fitted to the mixer 10 instead of the usual bowl 30, in order to adapt the heated stand mixer 10 for use as a pressure-cooking appliance. The bowl 72 in this example closely resembles the original bowl 30 although, if preferred, a specially-configured bowl could be used instead. However, the base at least of the bowl 72 is preferably constructed and configured identically to the bowl 30, to enable the bowl 72 to be readily attached to and removed from the support 20 and, importantly, to co-operate as described in the aforementioned WO-A1-2009/103945 with temperature-sensing elements provided in the support 20 and utilised to control the stand-mixer's heater in accordance with the monitored temperature of the contents of the bowl 72.

In any event, the bowl 72 of this embodiment is fitted with a lid 74 that can, in known manner, be sealingly latched to the bowl by latching means (such as a latch) 76 capable of resisting the pressures developed in pressure-cooking appliances. The lid 74 is also fitted with an over-pressure relief valve 78 of any convenient known kind.

By this means, the heated stand mixer 10 and its attachment 70 constitute a pressure-cooking arrangement.

Similarly, in other embodiments, attachments in the form of lidded bowls are provided to economically convert the stand-mixer 10 temporarily into other appliances which would otherwise need to be purchased separately, as stand-alone units.

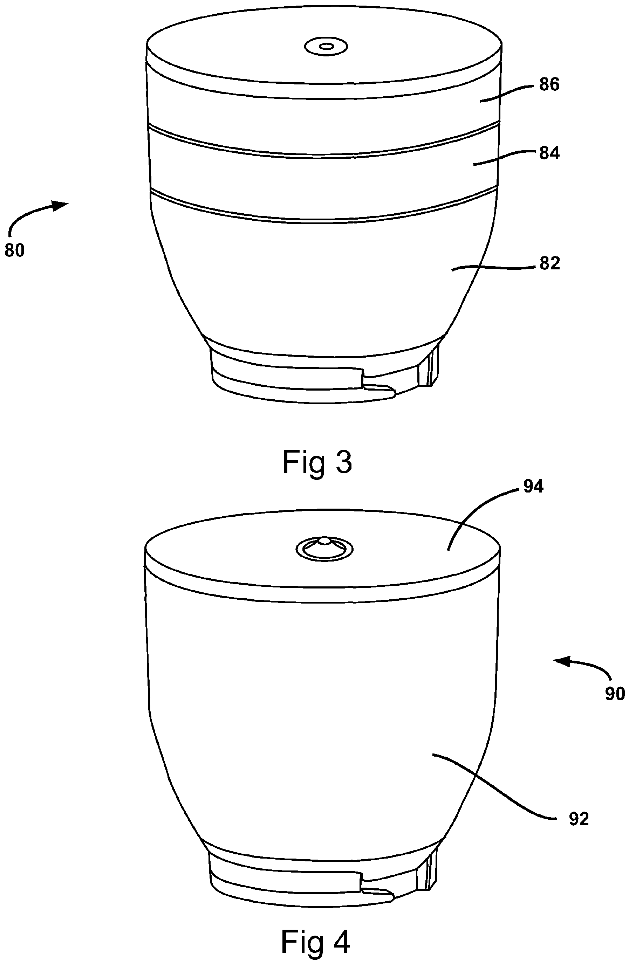

One such attachment is shown at 80 in Figure 3; the attachment 80 comprising a first bowl 82, again designed to couple to the support 20 of the stand mixer 10 in place of the conventional mixing bowl 30. As in the previous embodiment, the base at least of the bowl 82 is preferably constructed and configured identically to the bowl 30, thereby not only enabling the bowl 82 to be readily attached to and removed from the support 20, but also enabling it to co-operate, as described in the aforementioned WO-A1-2009/103945, with temperature-sensing elements provided in the support 20 and utilised to control the stand-mixer's heater in accordance with the monitored temperature of the contents of the bowl 82.

In this embodiment the bowl 82 is intended to contain water, or another liquid, which is to be heated to generate steam, and the bowl 82 is configured to support one or more further bowls, such as 84 and 86, stacked thereon and adapted either for steaming foodstuffs such as fish or vegetables, or for juice and/or jam making. As is known, suitably apertured separators are incorporated into, or otherwise provided between, the stacked bowls, as required for the specific application for which the attachment 80 is intended. Moreover, the uppermost bowl, 86 in this instance, is fitted with a lid to contain the steam within the attachment 80.

In a further embodiment, as shown in Figure 4, an attachment 90 is provided to convert the stand mixer 10 temporarily into a rice-cooking appliance.

The attachment 90 comprises a bowl 92, again designed to couple to the support 20 of the stand mixer 10 in place of the conventional mixing bowl 30. As in the previous embodiments, the base at least of the bowl 92 is preferably constructed and configured identically to the bowl 30, thereby not only enabling the bowl 92 to be readily attached to and removed from the support 20, but also enabling it to co-operate, as described in the aforementioned WO-A1-2009/103945, with temperature-sensing elements provided in the support 20 and utilised to control the stand-mixer's heater in accordance with the monitored temperature of the contents of the bowl 92.

In this embodiment, the bowl 92, or a removable insert (not shown) configured as an inner container, is intended to contain water and rice, and the bowl 92 is provided with a vented lid 94 configured in known manner to allow the escape of steam during the rice cooking process.

As mentioned above, the attachments 70, 80 and 90 all are based upon the use of a bowl that shares at least certain characteristics of construction and configuration with the bowl 30 that is normally used for various conventional operations of the stand mixer 10, such as mixing, stirring, beating, folding, etc. For operation in accordance with any of the embodiments, therefore, the bowl (72, 82 or 92) of the selected attachment is removably latched onto the pedestal 20 of the mixer 10 by whatever means is used to latch the bowl 30 in place for normal operation. Typically, as in the current embodiments, a bayonet latch is utilised. Subject to the need for the bowls 72, 82 and 92 to co-operate with the temperature monitoring and control system of the mixer 10, they can be configured to various shapes and any of them can be made out of any food approved material. It will also be appreciated that any or all of the bowls could be made transparent, semi-transparent (translucent) or opaque. Clearly the bowls do not all have to be constructed of the same materials or in the same way, as long as each attachment co-operates with the stand mixer as appropriate to perform its designated task.

Given the foregoing description, it will be appreciated that other lidded bowl attachments, such as tagines and slow-cookers (or so-called crock pots), can be configured for alternative cuisines without departing from the scope of the invention.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A combination of a heated stand mixer (10) and a lidded attachment (70), wherein the lidded attachment adapts the heated stand mixer to be suitable to perform cooking operations such as pressure-cooking, steaming or rice-cooking, wherein the lidded attachment comprises a bowl (72) and a lid (74), wherein the lid is arranged to be latched and sealed to the bowl by means of pressure-resistant latching components (76).

2. A combination according to claim 1, wherein the bowl couples to a base (20) of the stand mixer, so that the bowl is arranged to be readily coupled to and removed from the stand mixer.

3. A combination according to claim 2, wherein the bowl of the lidded attachment is adapted to engage with temperature sensors provided on the stand mixer and utilised for temperature control.

4. A combination according to any of claims 1 to 3 wherein the lid of said lidded attachment is provided with an over-pressure release valve (78).

5. A combination according to any of claims 1 to 4, wherein the lidded attachment (80) comprises a first bowl (82) configured to couple to the base of the stand mixer, and adapted to support one or more further bowls (84, 86) stacked thereon and adapted for steaming, or for juice and/or jam making.

6. A combination according to claim 5, wherein apertured separators are incorporated into, or otherwise provided between, the stacked bowls, for steaming, or for heating fruits and the like to extract juice therefrom, and wherein the lid is fitted to an uppermost bowl of the stacked bowls and adapted to contain steam within the lidded attachment.

7. A combination according to any of claims 1 to 4, wherein the lid is a vented lid (94), thereby adapting the attachment (90) for rice-cooking.

8. A lidded attachment which temporarily adapts a heated stand mixer for performing rice-cooking, wherein the lidded attachment (90) comprises a bowl (92) and a lid (94), wherein the bowl couples to a base (20) of the stand mixer, so that the bowl is arranged to be readily coupled to and removed from the stand mixer, and wherein the lid is a vented lid that is arranged to be latched and sealed to the bowl thereby adapting the attachment for rice-cooking.

9. A lidded attachment according to claim 8, wherein the lid is arranged to be latched and sealed to the bowl by means of pressure-resistant latching components.

10. A lidded attachment for temporarily adapting a heated stand mixer for performing cooking operations such as pressure-cooking, steaming or rice-cooking, wherein the lidded attachment (80) comprises a bowl, one or more further bowls and a lid, wherein the bowl comprises a first bowl (82) configured to couple to a base (20) of a heated stand mixer (10), so that the bowl is arranged to be readily coupled to and removed from the stand mixer, and adapted to support the one or more further bowls (84, 86) stacked thereon adapted for steaming, or for juice and/or jam making, and wherein apertured separators are incorporated into, or otherwise provided between, the stacked bowls, for steaming, or for heating fruits and the like to extract juice therefrom, and wherein the lid is latched and sealed to an uppermost bowl of the stacked bowls to contain steam within the lidded attachment.

11. A lidded attachment according to claim 10, wherein the lid is arranged to be latched and sealed to the bowl by means of pressure-resistant latching components.

## Patentansprüche

1. Kombination aus einer Rührmaschine (10) mit Kochfunktion und einem mit Deckel versehenen Zubehör (70), wobei das mit Deckel versehene Zubehör die Rührmaschine mit Kochfunktion adaptiert, so dass sie zum Durchführen von Kochvorgängen, wie etwa Dampfdruckkochen, Dampfgaren oder Reiskochen, geeignet ist, wobei das mit Deckel versehene Zubehör eine Schüssel (72) und einen Deckel (74) umfasst, wobei der Deckel angeordnet ist, um mittels druckbeständiger Verriegelungskomponenten (76) auf der Schüssel verriegelt und abgedichtet zu werden.

2. Kombination nach Anspruch 1, wobei die Schüssel mit einer Basis (20) der Rührmaschine gekoppelt ist, so dass die Schüssel angeordnet ist, um leicht mit bzw. von der Rührmaschine gekoppelt und abgenommen zu werden.

3. Kombination nach Anspruch 2, wobei die Schüssel des mit Deckel versehenen Zubehörs ausgeführt ist, um mit Temperatursensoren in Eingriff zu kommen, die an der Rührmaschine bereitgestellt sind und zur Temperaturregelung genutzt werden.

4. Kombination nach einem der Ansprüche 1 bis 3, wobei der Deckel des genannten mit Deckel versehenen Zubehörs mit einem Überdruckablassventil (78) versehen ist.

5. Kombination nach einem der Ansprüche 1 bis 4, wobei das mit Deckel versehene Zubehör (80) eine erste Schüssel (82) aufweist, die zum Koppeln mit der Basis der Rührmaschine gestaltet ist und zum Tragen von einer oder mehr weiteren darauf gestapelten Schüsseln (84, 86) ausgeführt ist und zum Dampfgaren oder zur Saft- und/oder Konfitürenherstellung ausgeführt ist.

6. Kombination nach Anspruch 5, wobei mit Öffnungen versehene Trennelemente in die bzw. zwischen den gestapelten Schüsseln zum Dampfgaren oder zum Erhitzen von Früchten und dergleichen zum Gewinnen von Saft aus ihnen eingefügt oder anderweitig bereitgestellt sind und wobei der Deckel an einer obersten Schüssel der gestapelten Schüsseln angebracht ist und zum Einschließen von Dampf in dem mit Deckel versehenen Zubehör ausgeführt ist.

7. Kombination nach einem der Ansprüche 1 bis 4, wobei der Deckel ein belüfteter Deckel (94) ist, wodurch das Zubehör (90) zum Reiskochen ausgeführt ist.

8. Mit Deckel versehenes Zubehör, das eine beheizte Rührmaschine zeitweise zum Durchführen von Reiskochen adaptiert, wobei das mit Deckel versehene Zubehör (90) eine Schüssel (92) und einen Deckel (94) umfasst, wobei die Schüssel mit einer Basis (20) der Rührmaschine gekoppelt ist, so dass die Schüssel angeordnet ist, um leicht mit bzw. von der Rührmaschine gekoppelt und abgenommen zu werden, und wobei der Deckel ein belüfteter Deckel ist, der angeordnet ist, um auf der Schüssel verriegelt und abgedichtet zu werden, wodurch das Zubehör zum Reiskochen adaptiert wird.

9. Mit Deckel versehenes Zubehör nach Anspruch 8, wobei der Deckel angeordnet ist, um mittels druckbeständiger Verriegelungskomponenten auf der Schüssel verriegelt und abgedichtet zu werden.

10. Mit Deckel versehenes Zubehör zum zeitweisen Adaptieren einer Rührmaschine mit Kochfunktion zum Durchführen von Kochvorgängen wie etwa Dampfdruckkochen, Dampfgaren oder Reiskochen, wobei das mit Deckel versehene Zubehör (80) eine Schüssel, eine oder mehr weitere Schüsseln und einen Deckel umfasst, wobei die Schüssel eine erste Schüssel (82) umfasst, die zum Koppeln mit einer Basis (20) einer Rührmaschine mit Kochfunktion (10) gestaltet ist, so dass die Schüssel angeordnet ist, um leicht mit bzw. von der Rührmaschine gekoppelt und abgenommen zu werden, und ausgeführt ist, um die eine oder mehr weiteren darauf gestapelten Schüsseln (84, 86) zum Dampfgaren oder zur Saft- und/oder Konfitürenherstellung ausgeführt zu tragen, und wobei mit Öffnungen versehene Trennelemente in die bzw. zwischen den gestapelten Schüsseln zum Dampfgaren oder zum Erhitzen von Früchten und dergleichen zum Gewinnen von Saft aus ihnen eingefügt oder anderweitig bereitgestellt sind und wobei der Deckel auf einer obersten Schüssel der gestapelten Schüsseln zum Einschließen von Dampf in dem mit Deckel versehenen Zubehör verriegelt und abgedichtet ist.

11. Mit Deckel versehenes Zubehör nach Anspruch 10, wobei der Deckel angeordnet ist, um mittels druckbeständiger Verriegelungskomponenten auf der Schüssel verriegelt und abgedichtet zu werden.

## Revendications

1. Combinaison d'un batteur sur socle chauffé (10) et d'un accessoire à couvercle (70), dans laquelle l'accessoire à attache s'adapte au batteur sur socle chauffé pour être apte à réaliser des opérations de cuisson telles que la cuisson sous pression, la cuisson à la vapeur ou la cuisson du riz, dans laquelle l'accessoire à couvercle comprend un bol (72) et un couvercle (74), dans laquelle le couvercle est agencé pour être bloqué et scellé sur le bol au moyen de composants de blocage résistants à la pression (76).

2. Combinaison selon la revendication 1, dans laquelle le bol s'accouple à une base (20) du mélangeur sur socle, de sorte que le bol est agencé pour être facilement couplé au batteur sur socle et enlevé de celui-ci.

3. Combinaison selon la revendication 2, dans laquelle le bol de l'accessoire à couvercle est conçu pour entrer en prise avec des capteurs de température fournis sur le batteur sur socle et utilisés pour la régulation de la température.

4. Combinaison selon l'une quelconque des revendications 1 à 3 dans laquelle le couvercle dudit accessoire à couvercle est pourvu d'une soupape de détente de pression (78).

5. Combinaison selon l'une quelconque des revendications 1 à 4, dans laquelle l'accessoire à couvercle (80) comprend un premier bol (82) configuré pour s'accoupler à la base du batteur à socle, et conçu pour supporter un ou plusieurs bols supplémentaires (84, 86) empilés sur celui-ci et conçus pour la cuisson à la vapeur, ou pour la réalisation de jus et/ou de confiture.

6. Combinaison selon la revendication 5, dans laquelle des séparateurs à orifices sont incorporés dans, ou fournis autrement entre, les bols empilés, pour la cuisson à la vapeur, ou pour chauffer des fruits et similaires pour en extraire du jus, et dans laquelle le couvercle est ajusté sur le plus haut des bols empilés et conçu pour contenir de la vapeur au sein de l'accessoire à couvercle.

7. Combinaison selon l'une quelconque des revendications 1 à 4, dans laquelle le couvercle est un couvercle ventilé (94), adaptant ainsi l'accessoire (90) pour la cuisson du riz.

8. Accessoire à couvercle qui s'adapte temporairement à un batteur sur socle chauffé pour réaliser la cuisson du riz, dans lequel l'accessoire à couvercle (90) comprend un bol (92) et un couvercle (94), dans lequel le bol s'accouple à une base (20) du batteur sur socle, de sorte que le bol est agencé pour être facilement couplé au batteur sur socle et enlevé de celui-ci, et dans lequel le couvercle est un couvercle ventilé qui est agencé pour être bloqué et scellé sur le bol adaptant ainsi l'accessoire pour la cuisson du riz.

9. Accessoire à couvercle selon la revendication 8, dans lequel le couvercle est agencé pour être bloqué et scellé sur le bol au moyen de composants de blocage résistants à la pression.

10. Accessoire à couvercle pour adapter temporairement un batteur sur socle chauffé pour réaliser des opérations de cuisson telles que la cuisson sous pression, la cuisson à la vapeur ou la cuisson du riz, dans lequel l'accessoire à couvercle (80) comprend un bol, un ou plusieurs bols supplémentaires et un couvercle, dans lequel le bol comprend un premier bol (82) configuré pour s'accoupler à une base (20) d'un batteur sur socle chauffé (10), de sorte que le bol est agencé pour être facilement couplé au batteur sur socle et enlevé de celui-ci, et conçu pour supporter les un ou plusieurs bols supplémentaires (84, 86) empilés sur celui-ci conçus pour la cuisson à la vapeur, ou pour la réalisation de jus et/ou de confiture, et dans lequel des séparateurs à orifices sont incorporés dans, ou fournis autrement entre, les bols empilés, pour la cuisson à la vapeur, ou pour chauffer des fruits et similaires afin d'en extraire du jus, et dans lequel le couvercle est bloqué et scellé sur le plus haut des bols empilés pour contenir de la vapeur au sein de l'accessoire à couvercle.

11. Accessoire à couvercle selon la revendication 10, dans lequel le couvercle est agencé pour être bloqué et scellé sur le bol au moyen de composants de blocage résistants à la pression.
